Europäisches Patentamt

European Patent Office

Office européen des brevets

(11) Veröffentlichungsnummer: **0 096 763**
**A2**

# EUROPÄISCHE PATENTANMELDUNG

(21) Anmeldenummer: 83105042.2

(22) Anmeldetag: 20.05.83

(51) Int. Cl.³: **A 42 B 3/02,** B 29 D 3/02,
B 29 F 1/00

(30) Priorität: 16.06.82 DE 3222681

(43) Veröffentlichungstag der Anmeldung: 28.12.83
Patentblatt 83/52

(84) Benannte Vertragsstaaten: AT BE CH DE FR GB IT LI LU
NL

(71) Anmelder: **Busch, Egon, Wiedenlübbertsweg 1,
D-4830 Gütersloh 1 (DE)**

(72) Erfinder: **Busch, Egon, Wiedenlübbertsweg 1,
D-4830 Gütersloh 1 (DE)**

(74) Vertreter: **Patentanwälte Grünecker, Dr. Kinkeldey, Dr.
Stockmair, Dr. Schumann, Jakob, Dr. Bezold, Meister,
Hilgers, Dr. Meyer-Plath, Maximilianstrasse 58,
D-8000 München 22 (DE)**

(54) Schutzhelm und Verfahren zum Herstellen des Schutzhelms.

(57) Die vorliegende Erfindung bezieht sich auf einen
Schutzhelm und ein Verfahren zu dessen Herstellung. Es ist
bereits ein Schutzhelm mit einer Außenschale, einer Innenschale und mit Schaumstoffkörpern, die zwischen den Schalen angeordnet sind, bekannt. Da die gesamte Aufprallenergie durch die äußere Schale aufgenommen werden muß,
muß diese Schale sehr fest und damit schwer ausgeführt
werden. Durch die Erfindung wird ein derartiger Helm derart weitergebildet, daß er bei niedrigem Gewicht eine hohe
Druck- und Verwindungssteifigkeit hat. Bei dem Helm gemäß der vorliegenden Erfindung sind die Schalen durch
eine Mehrzahl von gegeneinander beabstandeten Verbindungselementen einstückig miteinander verbunden.

Schutzhelm und Verfahren zum
Herstellen des Schutzhelms

B e s c h r e i b u n g

Die vorliegende Erfindung bezieht sich auf einen Schutzhelm nach dem Oberbegriff des Anspruchs 1.

Aus der US-PS 40 69 565 ist bereits ein Schutzhelm mit
einer Außenschale und mit einer von der Außenschale beabstandeten Innenschale und mit Schaumstoffkörpern, die
zwischen den Schalen angeordnet sind, bekannt. Die innere
Schale besteht aus einem fließfähigen Kunststoff, um sich
der Kopfform des Schutzhelmträgers anpassen zu können.
Die zwischen den Schalen angeordnete Schaumstoffschicht
dient als energieabsorbierende Schicht, die sich bei einem
auf die Außenschale auftreffenden Stoß verformt und damit
Energie absorbiert. Die Festigkeit und Verwindungsstreifigkeit eines derartigen Helmes wird ausschließlich durch
die Eigenschaften der äußeren Helmschale bestimmt.
Wirkt beispielsweise eine orthogonal auf die äußere Helmschale gerichtete Kraft auf den Helm ein, so bewirkt diese
Kraft eine Durchbiegung der äußeren Helmschale, die zu
einer tangential in dieser Helmschale verlaufenden Druckspannung führt, welche die Reaktionskraft zu der angreifenden Kraft aufbaut. Zwar wird bei beginnendem Angreifen
der äußeren Kraft und damit bei beginnender Durchbiegung
der äußeren Helmschale durch die sich verformende Schaumstoffschicht eine gewisse Energie aufgenommen, jedoch
trägt die Schaumstoffschicht nur während des Verformungsvorganges, nicht jedoch während eines quasistatischen Verformungszustandes der äußeren Helmschale zum Aufbau einer
zusätzlichen Reaktionskraft bei. Daher muß im Verformungsendstadium die gesamte einwirkende Kraft durch Druckspannungen in der äußeren Helmschale, die die Reaktionskraft aufbauen, aufgenommen werden. Daher muß bei einem derartigen Schutzhelm die äußere Helmschale die gleiche Steifigkeit aufweisen, wie sie ein einschaliger Helm mit Innenpolsterung haben müßte. Damit hat der Konstrukteur eines derartigen Helmes lediglich zwei Alternativen: Er baut einen hochfesten, verbindungssteifen Helm, der eine große Außenwandstärke und damit ein hohes Eigengewicht aufweist, oder er baut einen leichten, angenehm zu tragenden Helm, der aufgrund seines niedrigen Eigengewichtes eine Verletzung der Nackenmuskulatur bzw. der Wirbelsäule des Schutzhelmträgers vermeidet und nimmt dabei eine niedrige Helmfestigkeit und eine niedrige Verwindungssteifigkeit des Helmes in Kauf.

Aus der DE-AS 24 04 849 ist ein Schutzhelm mit einer Innenschale und einer Außenschale bekannt. Zwischen Innenschale und Außenschale liegt eine an der Innenfläche der Helmschale befestigte energieabsorbierende Schicht, die vorzugsweise aus Hartschaum besteht. Diese Schicht weist ebenfalls aus diesem Hartschaum bestehende Vorsprünge auf, die röhrenförmig ausgebildet sind und sich von der äußeren Helmschale bis zur inneren Helmschale erstrecken. Die energieabsorbierende Schicht dieses Schutzhelmes, die aus Hartschaum besteht, unterscheidet sich von der energieabsorbierenden Schicht nach der US-PS 40 69 565 lediglich dadurch, daß die Schicht bei dem Helm nach der DE-AS nicht homogen, sondern mit Hohlräumen versehen ist. Die Wirkungsweise des Helmes ist gleich, so daß auch dieser Helm die Nachteile hat, mit der der Helm nach der US-PS 40 69 565 behaftet ist.

Aus der FR-PS 23 46 292 ist ein Helm mit einer Außenschale und einer Innenschale bekannt, bei dem zwischen den Schalen eine energieabsorbierende Schicht, die aus einem wabenförmigen Material besteht, vorgesehen ist. Auch bei diesem Helm muß eine quasistatische Druckkraft, die auf die äußere Helmschale einwirkt, völlig durch tangentiale Druckspannungen in der äußeren Helmschale aufgenommen werden, die eine der Druckkraft entsprechende Reaktionskraft hervorrufen. Demgemäß muß auch bei diesem Helm allein die Außenschale bereits eine derartige Verwindungs- und Druckfestigkeit aufweisen, wie sie der gesamte Helm haben soll. Damit hat auch dieser Helm die Nachteile, die dem Helm nach der US-PS 40 64 565 zueigen sind.

Aus der US-PS 39 99 220 ist ein einschaliger Helm bekannt, der eine weiche Innenpolsterung und eine weiche Außenpolsterung hat. Die Polsterung wird durch eine luftdichte Schicht, die die Helmschale innen und außen umhüllt und mit dieser sowohl innen als auch außen an mehreren Punkten verbunden ist, und mit Druckluft gefüllt ist, gebildet. Dieser Helm soll dazu beitragen, bei Kampfsportarten die Verletzung des Gegners des Helmträgers durch eine harte Helmschale zu verhindern. Mit dem erfindungsgemäßen Schutzhelm hat dieser Helm lediglich die Schutzfunktion gemeinsam.

Der Erfindung liegt das technische Problem zugrunde, einen Helm nach dem Oberbegriff des Hauptanspruchs zu schaffen, der bei niedrigem Gewicht eine hohe Druck- und Verwindungsfestigkeit hat.

Dieses technische Problem wird bei einem Schutzhelm nach dem Oberbegriff des Hauptanspruchs durch das Merkmal des kennzeichnenden Teils des Hauptanspruchs gelöst.

Bei dem erfindungsgemäßen Helm geht die Helminnenschale in die Helmaußenschale über einstückig mit beiden Schalen verbundene Verbindungselemente über. Die zwischen Helminnenschale und Helmaußenschale außerhalb der Verbindungselemente liegenden Hohlräume sind durch Hartschaum bzw. Schaumstoffkörper ausgefüllt. Hierdurch ergibt sich erfindungsgemäß eine Art Fachwerkstruktur, bei der je ein Element der Helmaußenschale über mit diesem einstückige Verbindungselemente mit einem Element der Helminnenschale verbunden ist. Der zwischen dem Helmaußenschalenelement und dem darunter liegenden Innenschalenelement eingeschlossene Hohlraum, der durch Verbindungselemente festgelegt ist, ist also durch ein Schaumstoffelement ausgefüllt. Damit ist jedes Element der Helmaußenschale mit jedem Element der Helminnenschale so verbunden, daß innerhalb eines durch die Stärke der Verbindungselemente vorgegebenen Belastungsbereiches sowohl eine Tangentialverschiebung der Schalenelemente gegeneinander wie auch eine orthogonale Verschiebung weitgehend verhindert wird. Wirkt nun eine in etwa punktförmige Druckkraft auf den Helm ein, so wird durch diese Druckkraft die gesamte fachwerkähnliche Struktur, bestehend aus Außenschale, Innenschale, Verbindungselemente und Schaumstoffkörper, verformt werden. Hierbei treten in der Außenschale Druckspannungen auf, während in der Innenschale Zugspannungen aufgenommen werden. Etwa in der Mitte zwischen den beiden Schalen befindet sich eine neutrale Zone, in der weder Druck- noch Zugspannungen auftreten. Die gesamte Belastung wird also sowohl durch die Außenschale wie auch durch die Innenschale aufgenommen, so daß die Zugfestigkeit der Innenschale die Druckfestigkeit der Außenschale erhöht. Aufgrund dieser erfindungsgemäßen Aufteilung der Helmbelastung auf beide Helmschalen wird eine vielfache Festigkeit gegenüber einer Helmkonstruktion erreicht, die die gleiche Innen- und Außenschale und die gleichen Schaumstoffkörper wie der Anmeldungsgegenstand hat, bei der jedoch aufgrund fehlender einstückiger Verbindungselemente eine relative Tangentialverschiebung von Innenschalenelementen gegenüber Außenschalenelementen möglich ist. Aufgrund der enormen Verwindungssteifigkeit, die durch die erfindungsgemäße Helmstruktur erreicht wird, ist es möglich, den Helm mit geringeren Materialstärken auszuführen, als sie z.B. ein Helm gemäß der US-PS 40 64 565 hat. Dies führt zu einer erheblichen Gewichtseinsparung und damit zu einer niedrigeren Belastung der Halswirbelsäule und der Nackenmuskulatur eines Helmträgers im Falle eines Sturzes.

Ein nach Anspruch 2 ausgebildeter Helm hat eine besonders hohe Steigkeit und Bruchfestigkeit.

Die Bauweise des Schutzhelms nach den Merkmalen des Anspruchs 3 ermöglicht die Schalenverbindung mit Elementen, die der Größe der auftretenden Belastung angepaßt sind.

Durch die Anordnung der Verbindungsstreifen nach Anspruch 4 hat der Schutzhelm an seinen Kanten eine geschlossene Form und eine hohe Festigkeit.

Durch die gewölbeartige bzw. strahlenartige Anordnung der Verbindungsstreifen nach Anspruch 5 werden bei einer Belastung auftretende Druck- und Zugkräfte gleichmäßig über die Außenschale und die Innenschalen verteilt. Die zusätzliche Verstärkung des Schutzhelms im Bereich von Befestigungspunkten des Visiers und des Kinnriemens leitet auftretende Kräfte über eine große Fläche in die Schalen ein.

Die in Anspruch 6 beschriebene Anordnung der Verbindungsstege trägt zu einer gleichmäßigen Verteilung auftretender Belastung an den jeweiligen Schalen bei. Durch die Verbindungsstege ist die für die Helmfestigkeit nötige Entfernung zwischen der innersten Schale und Außenschale auch bei punktförmiger Belastung der Außenschale gesichert. Bei einer extremen Belastung der Außenschale wird zunächst die Außenschale eingedrückt, wobei die Verbindungsstege und die Schaumstoffkörper zerstört und zusammengedrückt werden. Die hierdurch absorbierte Energie reduziert die an die innerste Schale übertragene Aufprallenergie.

Der Schutzhelm nach Anspruch 7 ist besonders einfach herzustellen. Das Verfahren nach Anspruch 8 zum Herstellen von Schutzhelmen ermöglicht eine einstückige Bauweise des mehrschaligen Schutzhelms, sichert die genaue Einhaltung der gewünschten Wandstärke der Außenschale und der Innenschalen und ermöglicht eine einfache und schnelle Fertigung der Schutzhelme.

Das Verfahren nach Anspruch 9 sichert eine hochglänzende und glatte Helmoberfläche und erleichtert das Einlegen des ersten Faservlies- oder Gewebezuschnitts, da das Gelcoat wie ein auf die Innenfläche der Matrize aufgebrachter Klebstoff wirkt.

Verfährt man nach den Merkmalen des Anspruchs 10, indem man die Injektionsnase vorzugsweise in einem später herauszuschneidenden Visierausschnitt des Helmes legt, so erhält man einen optisch ansprechenden Helm.

Durch Anwendung der Merkmale des Anspruchs 11 erhält man eine Glasfaserverstärkung des Polymerisats auch im Bereich der Verstärkungselemente, da sich z.B. ein relativ dickes und weiches Faservlies vor der Injektion in alle durch die Schaumstoffkörper freigelassenen Hohlräume einbettet.

In besonders vorteilhafter Weise lassen sich die Verbindungsstege und Verbindungsstreifen durch ein Verfahren nach den Merkmalen des Anspruchs 12 herstellen.

Anhand eines in der Zeichnung dargestellten Ausführungsbeispieles eines Schutzhelms und einer Vorrichtung zum Durchführen des angegebenen Verfahrens wird die Erfindung nachfolgend näher beschrieben.

Es zeigen:

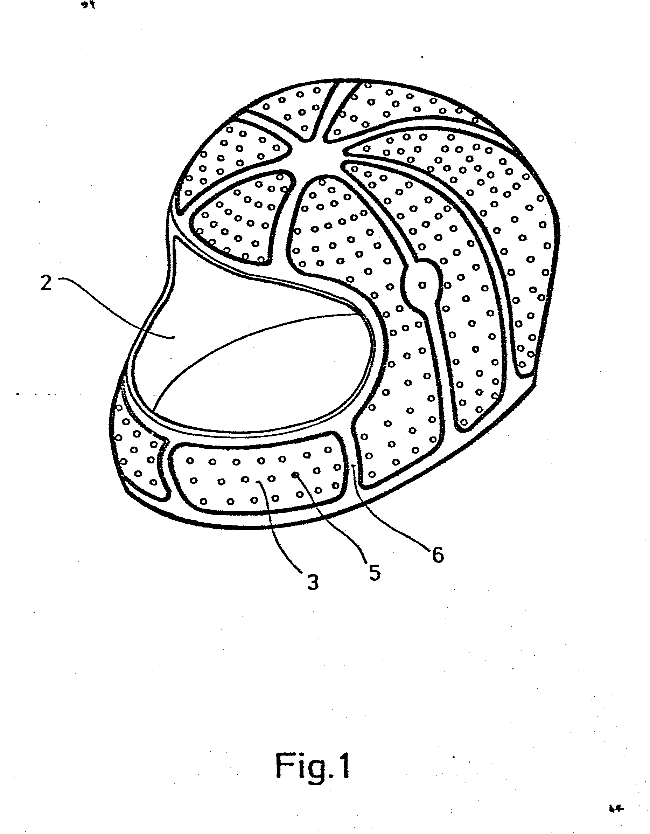

Figur 1 eine perspektivische Darstellung eines zweischaligen Schutzhelms ohne Außenschale,

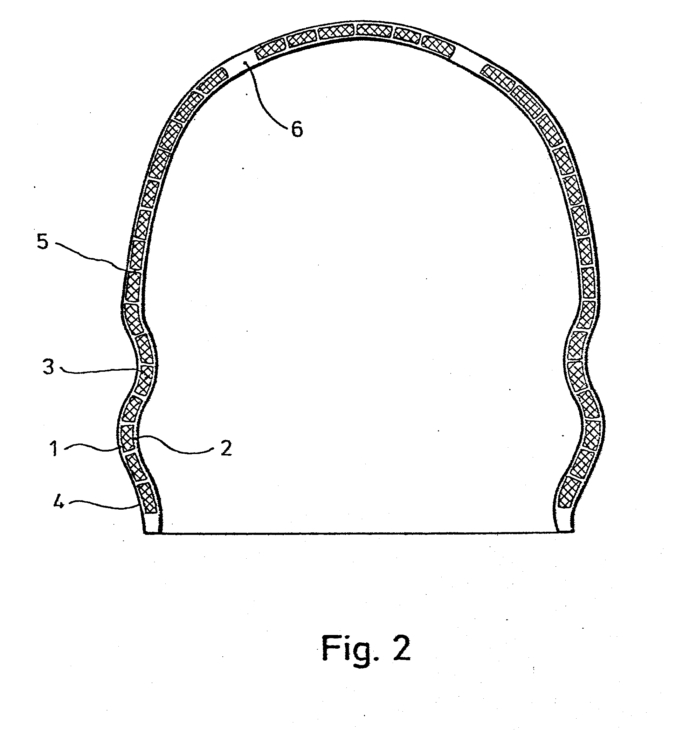

Figur 2 einen Querschnitt durch den Schutzhelm von Fig. 1,

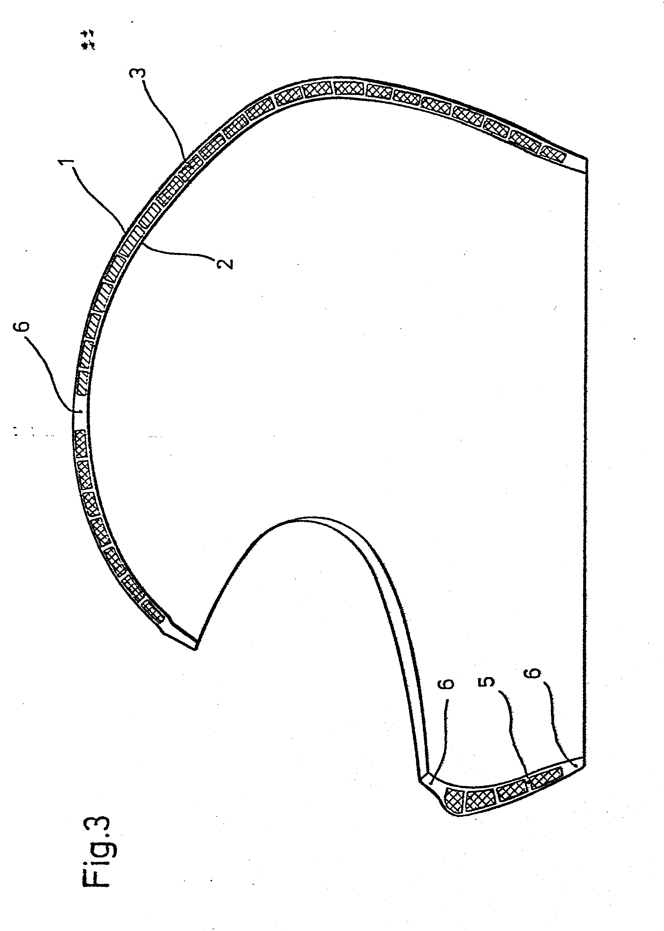

Figur 3 einen Längsschnitt durch den Schutzhelm von Fig. 1,

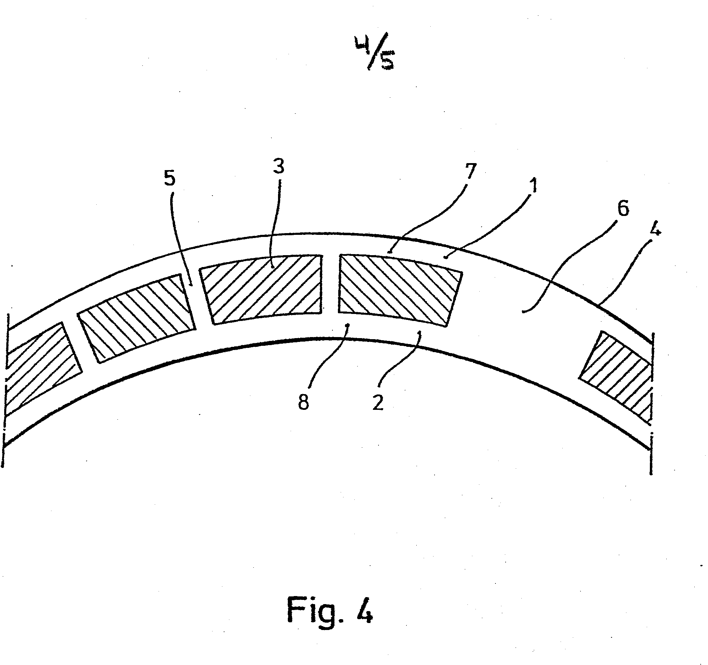

Figur 4 eine vergrößerte Teildarstellung eines Ausschnitts von Figur 3, und

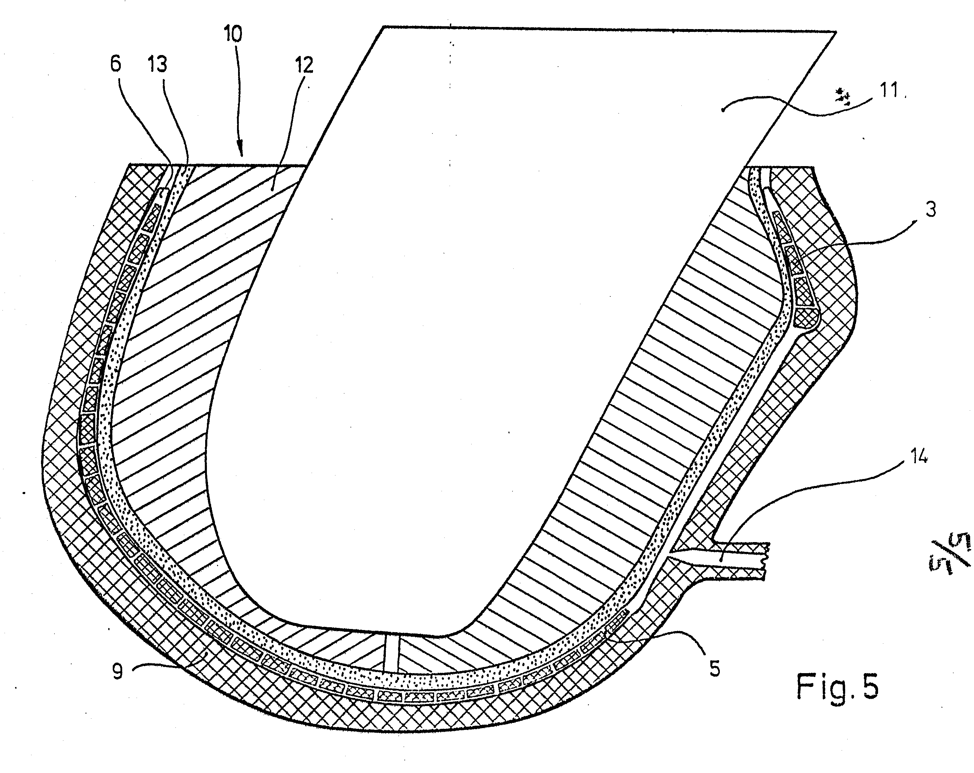

Figur 5 einen Querschnitt durch eine Vorrichtung zum Herstellen des Schutzhelms.

Der Schutzhelm hat eine Außenschale 1 und eine Innenschale 2 aus glasfaserverstärktem Polymerisat. Die Schalen 1, 2 sind über Verbindungselemente 5, 6 aus glasfaserverstärktem Polymerisat fest miteinander verbunden. Die Verbindungselemente 5, 6 bestehen aus Verbindungsstegen 5, die jeweils senkrecht auf der Innenseite der Außenschale und der Außenseite der Innenschale stehen, und Verbindungsstreifen 6, die die Schalen 1, 2 entlang einer Helmöffnung und entlang einer Visieröffnung miteinander verbinden. Weitere Verbindungsstreifen 6 laufen strahlenartig von einem oberen Bereich des Schutzhelmes ausgehend bis zu der Helmöffnung. Der zwischen den Schalen liegende Hohlraum, der nicht durch Verbindungsstreifen 6 und Verbindungsstrege 5 ausgefüllt ist, beinhaltet Schaumstoffkörper 3 aus einem Hartschaum. Die Außenschale 1 beinhaltet einen ersten Faservlieszuschnitt, die Innenschale 2 beinhaltet einen zweiten Faservlieszuschnitt. Die jeweiligen Faservliese erstrecken sich jeweils soweit in die Verbindungsstrege und Verbindungsstreifen, daß sie sich gegenseitig berühren. Die Oberfläche der Außenschale 1 ist mit einer Gelcoat-Schicht 4 bedeckt. Auf die Innenseite der Innenschale 2 ist eine aus Schaumgummi bestehende Innenpolsterung aufgeklebt. Die Innenpolsterung ist mit einem Tuch überzogen.

Anstelle des glasfaserverstärkten Polymerisates kann auch jedes andere Duroplast verwendet werden. Ebenfall ist es möglich, die Schalen sowie die Verbindungselemente aus einem thermoplastischen Kunststoff herzustellen.

Im Folgenden wird das Verfahren zum Herstellen eines zweischaligen Schutzhelmes im einzelnen beschrieben.

In eine Matrize 9, deren Innenform der Außenform der Außenschale 1 entspricht, wird eine Schicht aus Gelcoat 4 eingespritzt. Durch das Gelcoat 4 erhält man eine glatte und harte Oberfläche der Außenschale 1. In das noch feuchte Gelcoat wird ein watteartig weicher, etwa 2 cm dicker, erster Faservlieszuschnitt 7 aus Glasfasermaterial eingelegt, so daß durch ihn die gesamte Innenoberfläche der mit Gelcoat 4 versehenen Matrize 9 bedeckt wird. In die mit Faservlieszuschnitt 7 ausgelegte Matrize 9 werden mehrere Schaumstoffkörper 3 oder ein einstückiger Schaumstoffkörper 3 eingelegt. Die Schaumstoffkörper 3 haben zylindrische Bohrungen, durch die die Form der Verbindungsstege 5 vorbestimmt wird, und weisen jeweils mit dem benachbarten Schaumstoffkörper 3 einen Zwischenraum auf, der die Form der Verbindungsstreifen 6 festlegt. Auf die Schaumstoffkörper 3 wird ein zweiter Faservlieszuschnitt 8 aus Glasfasermaterial aufgelegt. Auch dieser zweite Zuschnitt hat etwa 2 cm Dicke und eine watteähnlich weiche Struktur.

Eine Patrize 10 besteht aus einem Kern 11, mehreren Formteilen 12 und aus einem aus Silicon-Kautschuk bestehenden Mantel 13 von etwa 4 mm Dicke. Der Mantel ist derart ausgebildet, daß er die den Kern 11 umgebenden Formteile 12 mit leichtem Druck umschließt.

Nach Einbringen des zweiten Faservlieszuschnittes 8 wird die Patrize 10 eingebracht, indem zunächst der Mantel 13 in die durch die zweite Faserfließschicht 8 gebildete Mulde eingelegt wird, daraufhin die Formteile 12 in den Mantel 13 eingelegt werden, in die der Kern 11 mittels einer Führungseinrichtung eingefahren wird.

Nach vollständigem Einfahren des Kernes ist durch die Außenoberfläche des Mantels 13 die Form der Innenoberfläche der Innenschale 2 festgelegt. Durch eine an der Matrize 9 vorgesehenen Injektionsöffnung 14 im Bereich der späteren Visieröffnung des Schutzhelmes wird Polymerisat injiziert. Der Injektionsvorgang wird relativ langsam vorgenommen, um ein Entweichen von Luftblasen aus dem durch Patrize 10 und Matritze 9 gebildeten Zwischenraum zu ermöglichen. Während des Verteilens des injizierten Polymerisats kann die Matrize 9 geheizt werden, um das Polymerisat zu verflüssigen. Während des Aushärtens des Polymerisates kann die Matrize 9 gekühlt werden, um die freiwerdende Wärme aus der exothermen Reaktion des aushärtenden Polymerisats abzuleiten. Nach dem Aushärten wird die Patrize 10 entfernt und der Schutzhelm aus der Matrize 9 herausgenommen. Nun wird die Visieröffnung aus dem Helm herausgeschnitten. Ein Visier und ein Kinnriemen werden am Helm befestigt und der Helm mit einer Innenpolsterung ausgeschlagen.

Abweichend vom obig beschriebenen Verfahren kann anstelle des Faserfließes auch ein Gewebe verwendet werden. Wenn keine hohen Anforderungen an die Außenoberfläche der Außenschale gestellt werden, kann auf die Gelcoat-Schicht verzichtet werden. Wenn anstelle eines sogenannten Integralhelmes mit Visieröffnung ein Halbschalenhelm hergestellt wird, kann auf das Aussägen einer Visieröffnung verzichtet werden. Bei geeigneter Form des Schutzhelmes kann die Patrize auch einstückig ausgeführt sein. Der Schutzhelm kann abweichend vom beschriebenen Ausführungsbeispiel und Verfahren aus einer Außenschale mit mehreren, voneinander und von der Außenschale beabstandeten Innenschalen bestehen.

0096763

GRÜNECKER, KINKELDEY, STOCKMAIR & PARTNER

PATENTANWÄLTE
EUROPEAN PATENT ATTORNEYS

A. GRÜNECKER, DIPL. ING
DR. H. KINKELDEY, DIPL. ING
DR. W. STOCKMAIR, DIPL. ING. AE E (CALTECH)
DR. K. SCHUMANN, DIPL. PHYS
P. H. JAKOB, DIPL. ING
DR. G. BEZOLD, DIPL. CHEM
W. MEISTER, DIPL. ING
H. HILGERS, DIPL. ING
DR. H. MEYER-PLATH, DIPL. ING

8000 MÜNCHEN 22
MAXIMILIANSTRASSE 43 — 58

20. Mai 1983
EP 1101-505

Egon Busch

Wiedenlübbertsweg 13

Gütersloh

Schutzhelm und Verfahren zum
Herstellen des Schutzhelms

P a t e n t a n s p r ü c h e

1. Schutzhelm mit einer Außenschale (1), mit mindestens einer von der nächstäußeren Schale (1) beabstandeten Innenschale (2) und mit Schaumstoffkörpern (3), die zwischen den Schalen (1,2) angeordnet sind, dadurch g e k e n n z e i c h n e t, daß die Schalen (1,2) durch eine Mehrzahl von gegeneinander beabstandeten Verbindungselementen (5, 6) einstückig miteinander verbunden sind.

2. Schutzhelm nach Anspruch 1, dadurch g e k e n n z e i c h n e t, daß die Schalen (1,2) und die Verbindungselemente (5,6) aus glasfaserverstärktem Polymerisat bestehen.

3. Schutzhelm nach Anspruch 1 oder 2, dadurch g e - k e n n z e i c h n e t, daß die Verbindungselemente (5, 6) aus Verbindungsstegen (5) und Verbindungsstreifen (6) bestehen.

4. Schutzhelm nach Anspruch 3, dadurch g e k e n n - z e i c h n e t, daß die Verbindungsstreifen (6) die inneren Schalen (2) mit der Außenschale (1) entlang einer Helmöffnung und entlang einer Visieröffnung verbinden.

5. Schutzhelm nach Anspruch 3 oder 4, dadurch g e - k e n n z e i c h n e t, daß sich die Verbindungsstreifen (6) strahlenförmig von einem oberen Bereich des Schutzhelmes ausgehend bis zu der Helmöffnung erstrecken und daß sie an allen hochbelasteten Bereichen des Schutzhelmes, insbesondere im Bereich der Visier- und Kinnbefestigung, angeordnet sind.

6. Schutzhelm nach einem der Ansprüche 1 bis 5, dadurch g e k e n n z e i c h n e t, daß die Verbindungsstrege (5) in den Bereichen zwischen den Schalen (1,2) vorgesehen sind, in denen keine Verbindungsstreifen (6) angeordnet sind, und daß sie, voneinander beabstandet, im wesentlichen senkrecht auf den jeweiligen Schalen (1,2) stehen und stabförmig ausgebildet sind.

7. Schutzhelm nach einem der Ansprüche 1 bis 6, dadurch g e k e n n z e i c h n e t, daß nur eine Innenschale (2) vorgesehen ist.

8. Verfahren zum Herstellen des Schutzhelms nach einem der Ansprüche 2 bis 7, bei dem in einer Matrize (9) ein Faservlies- oder Gewebezuschnitt (7) eingelegt wird, in den Hohlraum der Matrize (9) eine Patrize (10) eingeführt wird und in dem Raum zwischen Matrize (9) und Patrize (10) Kunstharz injiziert wird, g e k e n n -

z e i c h n e t durch die folgenden Verfahrensschritte:

a) In die mit dem ersten Faservlies- oder Gewebezuschnitt
   (7) ausgelegte Matrize (9) werden Schaumstoffkörper
   (3) eingelegt,

b) auf die Schaumstoffkörper (3) wird ein zweiter Faservlies- oder Gewebezuschnitt (8) aufgelegt,

c) die Verfahrensschritte a) und b) werden entsprechend
   der Anzahl der Innenschalen (2) wiederholt,

d) in die Matrize (9) wird die Patrize (10) eingebracht,
   und

e) in dem durch die Matrize (9) und die Patrize (10) gebildeten Zwischenraum wird Polymerisat injiziert.


9. Verfahren nach Anspruch 8, dadurch  g e k e n n -
z e i c h n e t, daß die Innenfläche der Matrize (9)
vor dem Einlegen des ersten Faservlies- oder Gewebezuschnitts (7) mit Gelcoat (4) beschichtet, vorzugsweise ausgespritzt wird.

10. Verfahren nach Anspruch 8 oder 9, dadurch  g e -
k e n n z e i c h n e t, daß die Injektion an einer
Stelle (14) des Schutzhelms erfolgt, an dem sich eine
entstehende Injektionsnase nicht spürend auswirkt.

11. Verfahren nach einem der Ansprüche 8 bis 10, dadurch
g e k e n n z e i c h n e t, daß die Dicken der Faservlies- oder Gewebezuschnitte (7,8) vor dem Durchführen
des Verfahrens zusammen wenigstens so groß sind wie die
Dicke des Schutzhelms.

12. Verfahren nach einem der Ansprüche 8 bis 11, dadurch

g e k e n n z e i c h n e t, daß die Schaumstoffkörper (3) zylindrische Bohrungen aufweisen, durch die die Form der Verbindungsstege (5) vorbestimmt wird, und daß durch zwischen den jeweils benachbarten Schaumstoffkörpern (3) liegende Ausnehmungen die Form der Verbindungsstreifen (6) festgelegt wird.

Fig.1

Fig. 2

Fig.3

4/5

Fig. 4

Fig.5